# EUROPEAN PATENT APPLICATION

(11) **EP 4 159 047 A1**
(43) Date of publication of application: **05.04.2023**
(21) Application number: 21828367.9
(22) Date of filing: 25.06.2021
(51) Int. Cl.: A23K 20/142, A23K 20/24

(54) **METHOD FOR PREPARING AMINO ACID GRANULES FROM FERMENTED LIQUID**

(30) Priority: 26.06.2020 KR 20200078737
(71) Applicant: CJ Cheiljedang Corporation, Seoul 04560 (KR)
(72) Inventor: KWON, Min Kyung, Seoul 04560 (KR); LEE, In Sung, Seoul 04560 (KR); GWAK, Won Sik, Seoul 04560 (KR); YU, Jae Hun, Seoul 04560 (KR); HONG, Jin Tae, Seoul 04560 (KR); KANG, Ji-hun, Seoul 04560 (KR)
(74) Representative: Regimbeau
(86) International application number: PCT/KR2021/008008
(87) International publication number: WO 2021/261952

(57) **Abstract**

The present application relates to a method for preparing amino acid granules from a fermentation broth and amino acid granules prepared by way of this method.

## Description

### [Technical Field]

The present application relates to a method for preparing amino acid granules from a fermentation broth and amino acid granules prepared by way of this method.

### [Background Art]

As one of the methods for producing amino acid additives for feed, a fermentation method using microorganisms (US 5431933 A) is used, and an amino acid additive can be produced by directly drying and solidifying the fermentation broth. However, when the fermentation broth is directly solidified in this way, the product exhibits high hygroscopicity and is thus likely to form clumps, and it may be difficult to handle the product since the fermentation broth contains a large amount of impurities that may cause coagulation. Thus, in order to overcome these disadvantages, it is necessary to discover a method for preparing a product in the form of granules that exhibit low hygroscopicity and are easily handled from a fermentation broth containing amino acids.

In general, the process for preparing granules from a fermentation broth containing amino acids includes a step of concentrating the fermentation broth and a step of granulating the fermentation broth. At this time, when water is removed as much as possible in the concentration process, the granulation process may be performed using a small amount of water vapor. However, when amino acid crystals are generated during the concentration process, there may be a problem in operation of the facility. Hence, in the case of concentrating amino acids (for example, valine, tryptophan, threonine, isoleucine, leucine, and methionine) having low solubility, there is a problem in that the concentration process must be terminated before the crystal nucleation. In this case, there is a need for a method capable of increasing the process efficiency and finally producing amino acid granules exhibiting diminished hygroscopicity by improving the solubility of amino acids in the fermentation broth and improving the degree of concentration when the concentration process is performed.

### [Disclosure]

### [Technical Problem]

An object of the present application is to provide a method for preparing amino acid granules, which includes a first step of adding a calcium source to a fermentation broth containing an amino acid at a molar ratio of 0.02 to 2.0 to the amino acid (calcium source adding step); and a second step of granulating a product obtained in the previous step (granulation step).

Another object of the present application is to provide amino acid granules containing an amino acid and a calcium ion at a molar ratio of 0.02 to 2.0 to the amino acid.

Still another object of the present application is to provide a feed composition containing the amino acid granules.

### [Technical Solution]

Each description and embodiment disclosed in the present application may also be applied to other descriptions and embodiments. That is, all combinations of various elements disclosed in the present application fall within the scope of the present application. Further, the scope of the present application is not limited by the specific description below.

In addition, a number of papers and patent documents are referenced throughout this specification, and their citations are indicated. The disclosure contents of the cited papers and patent documents are incorporated herein by reference in their entirety to more clearly describe the level of the technical field to which the present invention pertains and the content of the present invention.

In order to achieve the above objects, an aspect of the present application provides a method for preparing amino acid granules, which includes a first step of adding a calcium source to a fermentation broth containing an amino acid at a molar ratio of 0.02 to 2.0 to the amino acid (calcium source adding step); and a second step of granulating a product obtained in the previous step (granulation step).

By way of the preparation method of the present application, it is possible to increase the efficiency of the concentration process by adding a calcium source to the fermentation broth containing amino acids prior to granulation and thus increase the solubility of amino acids in the fermentation broth in the preparation of amino acid granules from a fermentation concentrate containing amino acids. The amino acid granules containing calcium prepared by way of the preparation method of the present application are based on the discovery that the granule formulation exhibits increased content stability as compared to the granules prepared by additionally adding a binder such as PVP to the fermentation broth.

As used herein, the term "calcium source" refers to a material capable of providing a calcium ion (Ca²⁺) without limitation. As the calcium source, calcium hydroxide (Ca(OH)₂), calcium oxide (CaO), calcium carbonate (CaCO₃), calcium sulfate (CaSO₄), or calcium chloride (CaCl₂) may be used, but the calcium source is not limited thereto. The calcium source may be added in the form of a powder, an aqueous solution, or a slurry, but the form of the calcium source added is not limited thereto.

In the first step of the present application, the solubility of amino acids having a low solubility is increased by adding a calcium source to a fermentation broth containing the amino acids, and a concentrate having a higher concentration can be obtained when a solution containing the amino acids is concentrated.

As used herein, the term "calcium" functions to keep bones healthy and facilitate blood circulation and is thus an essential mineral for vertebrates. More than 99% (w/w) of calcium is present in bones and teeth, and the rest is present in blood and muscles. Adequate amounts of calcium help keep bones healthy and prevent osteoporosis. Calcium also helps prevent muscle cramps by contracting muscles, lowers cholesterol levels, and diminishes the risk of cardiovascular disease. However, when calcium is insufficient, bones are not properly formed and muscles and nerves are damaged, and this easily causes injuries such as fractures even with minor trauma and increases the risk of osteoporosis. Such calcium is also provided to animals in the form of a feed additive in order to prevent diarrhea and dysentery and to aid digestion and absorption especially in piglets.

Consequently, the amino acid granules prepared by way of the preparation method according to the present application contain calcium and thus can simultaneously provide calcium, which is an inorganic substance necessary for the living body, together with amino acids, for example, essential amino acids.

In the first step, the calcium source may be added at a molar ratio of 0.02 to 2.0, 0.05 to 2.0, 0.07 to 1.5, 0.1 to 1.0, or 0.2 to 0.6 of calcium ions to amino acids in the fermentation broth containing the amino acids, but the molar ratio is not limited thereto.

In the present application, the fermentation broth containing amino acids may be the liquid itself of a fermentation product obtained according to a known microbial fermentation method (US 8465962 B2, US 9885093 B2, US 10351859 B2, US 7863435 B2, US 10787692 B2, US 9029105 B2, US 2021-0094903 A1) or a concentrate obtained by concentrating the fermentation product, but is not limited thereto. For example, a concentration step may be additionally performed before or after the first step, but the order is not limited thereto.

As used herein, the term "fermentation broth" refers to a culture obtained by culturing microorganisms. The fermentation broth may contain the cultured microorganisms.

As used herein, the term "fermentation broth containing amino acids" may be used interchangeably with "amino acid-containing fermentation broth" or "amino acid fermentation broth".

Specifically, the fermentation broth containing amino acids of the present application can be obtained by culturing or fermenting microorganisms producing the amino acids. The microorganisms and the method for culturing or fermenting the microorganisms may be selected by those skilled in the art from known kinds and methods. For example, the microorganisms include both wild-type microorganisms and microorganisms in which genetic modification has occurred naturally or artificially, are microorganisms in which a specific mechanism is weakened or enhanced by a cause such as insertion of an external gene or intensification or inactivation of the activity of an endogenous gene, and may be microorganisms (US 9587261 B2, US 7863435 B2, and the like) in which genetic mutation has occurred or activity is intensified for the production of the desired L-amino acids. Specifically, the kinds of microorganisms are not particularly limited as long as they can produce the desired amino acids, but may be microorganisms belonging to the genus *Enterobacter,* the genus *Escherichia,* the genus *Erwinia,* the genus *Serratia,* the genus *Providencia,* the genus *Corynebacterium,* and the genus *Brevibacterium.* More specifically, the microorganisms may be microorganisms belonging to the genus *Corynebacterium* or the genus *Escherichia.* The microorganisms belonging to the genus *Corynebacterium* may be *Corynebacterium glutamicum, Corynebacterium ammoniagenes, Corynebacterium thermoaminogenes, Corynebacterium efficiens, Corynebacterium stationis, Corynebacterium phocae, Corynebacterium flavescens, Corynebacterium humireducens, Corynebacterium halotolerans, Corynebacterium pollutisoli, Corynebacterium marinum, Corynebacterium freiburgense, Corynebacterium cystitidis, Corynebacterium durum, Corynebacterium pilosum, Corynebacterium testudinoris* or the like, but are not limited thereto. The microorganisms belonging to the genus *Escherichia* may be *Escherichia coli,* but are not limited thereto.

Specifically, the concentration may be performed to a degree of concentration of more than 0% (w/w) and 75% (w/w) or less. When the degree of concentration exceeds the above degree of concentration, the concentrate gels, the fluidity thereof is significantly lowered, and it may be difficult to perform the next step. For example, the degree of concentration is a value set in order to prevent inhibition of the process by early crystal nucleation and the like when the concentrate is placed in a granulator in the granulation step. Hence, the allowable value of the degree of concentration may be changed depending on the type and/or driving method of the facility used, and the like, and thus the conditions in the present application are not limited thereto. For example, the degree of concentration may be 5% (w/w) or more and 75% (w/w) or less, 10% (w/w) or more and 70% (w/w) or less, or 20% (w/w) or more and 65% (w/w) or less, but is not limited thereto.

The concentration step is a step of increasing the content of solids by removing part of liquid components in the fermentation broth, and may be performed through vacuum, heating, and/or drying, but is not limited thereto.

For example, the amino acid to which the preparation method of the present application can be applied may be an amino acid having a low solubility of more than 0 g/100 g and 20 g/100g or less in water at 25°C, but is not limited thereto. By applying the preparation method of the present application to an amino acid having low solubility as described above, it can be expected to exert a more remarkable effect than in the existing process.

Specifically, the amino acid may be valine, tryptophan, threonine, isoleucine, leucine, methionine, histidine, or phenylalanine, but is not limited thereto.

In the present application, the second step of granulating the concentrate is performed to form granules that are particles having predetermined sizes from a powder or fine solid material, and may be performed by way of a granulation method known in the art without limitation. For example, a mixing granulation method may be applied in which granules are obtained by injecting seeds into a ploughshare mixer granulator through a feeder at a constant speed and supplying the concentrate through a peristaltic pump at the same time, or in which a fluidized bed granulation method in which a predetermined amount of seeds is added to a fluidized bed granulator and a predetermined amount of concentrate is injected thereinto at a constant speed to form granules. At this time, the preparation method may further include a step of drying the obtained granules, but is not limited thereto.

As used herein, the term "granules" refers to macroscopic particles that are permanent aggregates formed of small particles such as powders to have larger sizes, and may be particles having an average particle diameter of 50 µm to 5 mm, 75 µm to 4 mm, or 100 µm to 3 mm.

Specifically, the preparation method of the present application may further include a step of adjusting the percentage of moisture discharged to 10% (w/w) to 50% (w/w) before the granulation step. As used in the present application, the "percentage of moisture discharged" is also referred to as "percentage of moisture mixed", is the proportion of moisture in the entire mixture, and can be calculated by subtracting the total solids (% (w/w)) from 100% (w/w) of the entire mixture. With regard to the present application, as the percentage of moisture discharged is high, an effect is exerted such that the recycle rate decreases when the concentrate is mixed with the seeds and added to the mixer for subsequent granulation and the production rate increases. For example, the percentage of moisture discharged may be adjusted to 10% (w/w) to 40% (w/w), 10% (w/w) to 30% (w/w), or 15% (w/w) to 30% (w/w), but is not limited thereto. However, it may be difficult to transport the slurry because of a high viscosity when the percentage of moisture discharged is less than the above range, and there may be problems of overload of the downstream process and excessive use of steam during granulation when the percentage of moisture discharged exceeds the above range. The percentage of moisture discharged may have a slightly different range depending on the kind of amino acid contained in the concentrate.

The percentage of moisture discharged may be determined by the addition speed of the slurry of the concentrated fermentation broth. Specifically, the moisture content in the granular particles may increase as the addition speed of the slurry increases, and the moisture content in the granular particles may decrease as the addition speed of the slurry decreases. The addition speed is determined according to the scale of the slurry of fermentation broth and may thus be appropriately selected and determined by those skilled in the art.

Moreover, the second step may be performed by adding seeds having a weight to be 50% (w/w) to 75% (w/w) of the weight of solids in the slurry of concentrate. Alternatively, the second step may be performed by adding seeds having a weight to be 55% (w/w) to 75% (w/w), 58% (w/w) to 75% (w/w), or 58% (w/w) to 67% (w/w) of the weight of solids, but is not limited thereto. For example, seeds having a weight to be 80% (w/w) or more of the weight of solids in the slurry of concentrate are used in the case of a concentrate prepared by not adding a calcium source to the fermentation broth, but there is an advantage in that the second step may be performed using a much smaller amount of seeds in the case of granulating the concentrate prepared according to the present application. Specifically, in the second step, granules can be prepared with an equal or greater yield using seeds only having a weight to be 70% (w/w) to 85% (w/w), 73% (w/w) to 85% (w/w), 70% (w/w) to 83% (w/w), or 73% (w/w) to 83% (w/w) of the weight of seeds used in the case of performing granulation using a concentrate prepared without adding a calcium source to the fermentation broth.

The mixing ratio of the seeds to the solids in the slurry may be used interchangeably with the "ratio of seed added".

As used herein, the term "seed" is called a seed crystal or a crystal seed and refers to a material used as a catalyst for crystallization or granulation of a liquid. Specifically, the seed in the present application may be an amino acid crystal, for example, a crystal of an amino acid of the same kind as the amino acid contained in the fermentation concentrate to be granulated, but is not limited thereto. When the seeds come into contact with the fermentation broth, the solid components present in the fermentation broth may be bound with the seeds to cause aggregation, and granules may thus be formed.

For example, the seeds used at this time may have an average particle size of 150 µm to 300 µm. Specifically, seeds having an average particle size of 150 µm to 250 µm, 200 µm to 300 µm, or 200 µm to 250 µm may be used, but are not limited thereto. As a result, the particle size of the seeds used may affect the productivity in the preparation process of granules according to the present application, and may be appropriately selected by those skilled in the art in consideration of the desired moisture content and the like.

Specifically, the preparation method of the present application may further include a step of pulverizing the product obtained in the previous step before the granulation step. This step may be performed using a conventional homogenizer, but is not limited thereto. Through the pulverization step, the average particle size of crystals in the concentrate may be decreased, and for example, nozzle clogging that may occur when a fluidized bed granulator is used may be prevented.

The preparation method of the present application may further include one or more steps selected from a step of preparing a fermentation broth; a step of adjusting the pH; a concentration step; a drying step; or a sieving step. Each of the steps may be performed by way of a method known in the art (for example, US 2021-0094903 A1) without limitation. The specific conditions may be appropriately changed for process optimization, but the preparation method is not limited thereto.

Another aspect of the present application provides amino acid granules containing an amino acid and a calcium ion at a molar ratio of 0.02 to 2.0 to the amino acid.

For example, the amino acid granules may exhibit a coefficient of moisture absorption of 7% (w/w) or less when standing at a humidity of 60% (w/w) and a temperature of 40°C for 1 to 48 hours from the time point of granulation, but are not limited thereto.

Specifically, the amino acid granules of the present application may be prepared by way of the above-described method. The amino acid granules of the present application may be used for addition to feed, but the use is not limited thereto.

Considering that granules are porous particles formed by aggregation of powder or small particles as defined above, granules may absorb surrounding moisture over time, and the degree of moisture absorption may be calculated from the difference between the mass in the dry state and the mass measured after time has elapsed. Meanwhile, when granular particles excessively absorb moisture, the wet granules may stick together to form an undesirable huge clump. Therefore, in order to have an advantage in long-term storage, it is desirable to control the granules themselves to exhibit low hygroscopicity.

In a specific embodiment of the present application, in the preparation of amino acid granules from a fermentation broth containing amino acids, amino acid granules prepared by simple concentration and granulation have an increase in weight by about 10% (w/w) due to moisture absorption when left for 24 hours at a humidity of 60% (w/w) and a temperature of 40°C, and an additional increase in weight by about 1 % (w/w) when stored for 48 hours. On the other hand, the amino acid granules prepared by the preparation method according to the present application have an increase in weight only by about 3.3% (w/w) due to moisture absorption when left for 24 hours at a humidity of 60% (w/w) and a temperature of 40°C, and it has been confirmed that the weight does not additionally increase when the storage period is extended up to 48 hours. This indicates that the amino acid granules of the present application exhibit low hygroscopicity that is significantly improved as compared to the hygroscopicity of the amino acid granules prepared according to the existing process, can maintain a granular state without being aggregated and/or coagulated by moisture absorption during storage, and are thus advantageous in terms of storage.

Still another aspect of the present application provides a feed composition containing the amino acid granules of the present application.

The amino acid granules of the present application may be suitable for use in the preparation of animal feeds as a feed additive. For example, the amino acid granules as a feed additive themselves may be mixed with feed materials as part of an animal feed premix or as a precursor of animal feed. The feed composition containing the amino acid granules may be administered to an animal singly or in combination with other feed additives in an edible carrier. The feed composition may be easily administered to an animal as a top dressing or by being directly mixed with the animal feed or as an oral formulation separate from the feed.

### [Advantageous Effects]

The preparation method of the present application further includes a step of treating a fermentation broth containing amino acids with a calcium source at a predetermined molar ratio prior to granulation, and it is thus possible to efficiently utilize the existing facility to produce amino acid granules having low solubility.

### [Brief Description of Drawings]

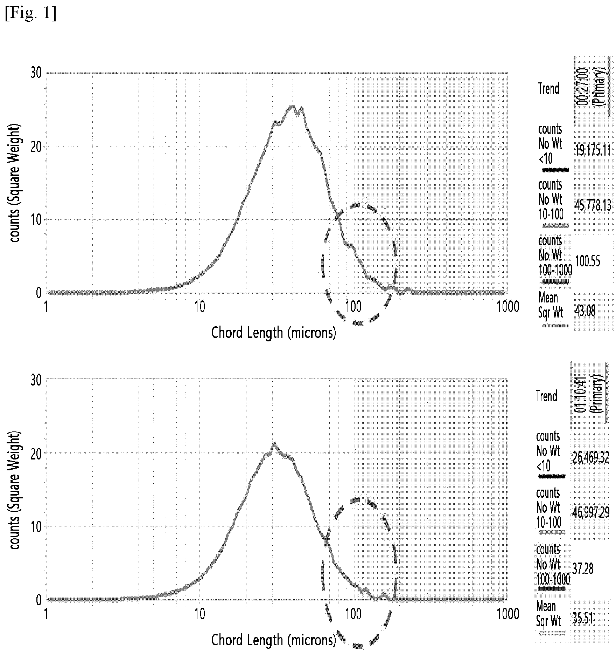

FIG. 1 is a diagram illustrating the size distribution of particles before (upper) and after (lower) a concentrated fermentation broth is pulverized using a homogenizer prior to granulation.

### [Detailed Description of the Invention]

Hereinafter, the present application will be described in more detail with reference to the following Examples. However, the following Examples are only for illustrating the present application, and the scope of the present application is not limited thereto.

### Example 1: Degree of concentration of amino acid depending on molar ratio of calcium added in fermentation broth

### Example 1-1: Preparation of valine-containing concentrate in which calcium is added to fermentation broth at molar ratio of 0.4

A valine fermentation broth (60 L) having the composition disclosed in Table 1 was added to a 110 L plastic container and stirred at 25°C and 100 rpm using a stirrer (model name: PL-SS-500D, PUNGLIM). To the solution, 1.3 kg of calcium hydroxide and 1.6 kg of water were added so that the molar ratio of calcium/valine was 0.4, and the mixture was stirred for one additional hour. At this time, the pH was 9.5, the volume of the mixed solution was 62.2 L, the valine concentration therein was 77.2 g/L, the purity thereof was 71.4% (w/w), and the total solids therein were 19.5% (w/w). The mixed solution was concentrated while being added to a 20 L concentration tube (model name: N-21NS, EYELA). The mixed solution was concentrated until the total degree of concentration reached 40% (w/w) at a pressure of 0.1 atm and a water bath temperature of 70°C. The concentration of the concentrate, of which the concentration was completed at the above degree of concentration, was 322.1 g/L, the purity thereof was 71.4% (w/w), the total solids therein were 40% (w/w), and the volume thereof was 14.9 L. Subsequently, granules were prepared using a ploughshare mixer granulator (Lodige). In the preparation of the granules, seeds having a purity of 78.5% (w/w), total solids of 99% (w/w), and an average particle size of 200 µm to 250 µm were used. A total of 35.4 kg of the seeds was added to the screw feeder in the ploughshare mixer granulator at a rate of 20 kg per hour, and a total of 16.8 kg of the concentrate was added thereto at a rate of 9.5 kg per hour using a peristaltic pump (model name RP-2100, EYELA). Granules containing solids at 80% (w/w) were recovered in an amount of 52.2 kg and dried using a fluidized bed dryer (FBG-3, S-ONE KOREA), and recovered in an amount of 41.7 kg with a recovery rate of 99% (w/w) since fine powders and the like were generated. The purity of the recovered granules was 77.3% (w/w), and the total solids therein were 99% (w/w).

### Example 1-2: Preparation of valine-containing concentrate in which calcium is added to fermentation broth at molar ratio of 0.2

The valine fermentation broth (60 L) was added to a 110 L plastic container and stirred at 25°C and 100 rpm using a stirrer. To the solution, 0.6 kg of calcium hydroxide and 0.8 kg of water were added so that the molar ratio of calcium/valine was 0.2, and the mixture was stirred for one additional hour. At this time, the pH was 8.8, the volume of the mixed solution was 61.1 L, the valine concentration therein was 78.6 g/L, the purity thereof was 74.6% (w/w), and the total solids therein were 10.3% (w/w). The mixed solution was concentrated while being added to a 20 L concentration tube. The mixed solution was concentrated until the total degree of concentration reached 35% (w/w) at a pressure of 0.1 atm and a water bath temperature of 70°C. The concentration of the concentrate, of which the concentration was completed at the above degree of concentration, was 285.0 g/L, the purity thereof was 74.6% (w/w), the total solids therein were 35% (w/w), and the volume thereof was 16.8 L. Subsequently, granules were prepared using a ploughshare mixer granulator. As in Example 1-1, a total of 65.7 kg of the seeds was added to the screw feeder in the ploughshare mixer granulator at a rate of 20 kg per hour, and a total of 18.4 kg of the concentrate was added thereto at a rate of 5.6 kg per hour. Granules containing solids at 85% (w/w) were recovered in an amount of 84.1 kg and dried using a fluidized bed dryer, and recovered in an amount of 71.5 kg with a recovery rate of 99% (w/w) since fine powders and the like were generated. The purity of the recovered granules was 78.1% (w/w), and the total solids therein were 99% (w/w).

### Example 1-3: Preparation of valine-containing concentrate in which calcium is added to fermentation broth at molar ratio of 0.6

A valine fermentation broth (60 L) recovered from a fermentation tank was added to a 110 L plastic container and stirred at 25°C and 100 rpm using a stirrer. To the solution, 1.9 kg of calcium hydroxide and 2.4 kg of water were added so that the molar ratio of calcium/valine was 0.6, and the mixture was stirred for one additional hour. At this time, the pH was 10.2, the volume of the mixed solution was 63.3 L, the valine concentration thereof was 75.9 g/L, the purity thereof was 67.1% (w/w), and the total solids therein were 10.9% (w/w). The mixed solution was concentrated while being added to a 20 L concentration tube. The mixed solution was concentrated until the total degree of concentration reached 33% (w/w) at a pressure of 0.1 atm and a water bath temperature of 70°C. The concentration of the concentrate, of which the concentration was completed at the above degree of concentration, was 246.9 g/L, the purity thereof was 67.1 % (w/w), the total solids therein were 33% (w/w), and the volume thereof was 19.4 L. Subsequently, granules were prepared using a ploughshare mixer granulator. As in Example 1-1, a total of 43.4 kg of the seeds was added to the screw feeder in the ploughshare mixer granulator at a rate of 20 kg per hour, and a total of 21.7 kg of the concentrate was added thereto at a rate of 10.0 kg per hour. Granules containing solids at 87% (w/w) were recovered in an amount of 65.1 kg and dried using a fluidized bed dryer, and recovered in an amount of 50.1 kg with a recovery rate of 99% (w/w) since fine powders and the like were generated. The purity of the recovered granules was 76.9% (w/w), and the total solids therein were 99% (w/w).

### Comparative Example 1: Preparation of valine-containing concentrate in which calcium is not added to fermentation broth

While being added to a 20 L concentration tube, 60 L of a valine fermentation broth was concentrated. The valine fermentation broth was concentrated until the total degree of concentration reached 25% (w/w) at a pressure of 0.1 atm and a water bath temperature of 70°C. The concentration of the concentrate, of which the concentration was completed at the above degree of concentration, was 210.5 g/L, the purity thereof was 80.0% (w/w), the total solids therein were 25% (w/w), and the volume thereof was 22.8 L. Subsequently, granules were prepared using a ploughshare mixer granulator. As in Example 1-1, a total of 137.5 kg of the seeds was added to the screw feeder in the ploughshare mixer granulator at a rate of 20 kg per hour, and a total of 24 kg of the concentrate was added thereto at a rate of 3.5 kg per hour. Granules containing solids at 88% (w/w) were recovered in an amount of 161.5 kg and dried using a fluidized bed dryer, and recovered in an amount of 142.1 kg with a recovery rate of 99% (w/w) since fine powders and the like were generated. The purity of the recovered granules was 78.6% (w/w), and the total solids therein were 99% (w/w).

**[Table 1]**

| | | Example 1-1 | Example 1-2 | Example 1-3 | Comparative Example 1 |
|---|---|---|---|---|---|
| Fermentat ion broth | Concentration (g/L) | 80 | | | |
| | Amino acid purity in total solids (% (w/w)) | 80 | | | |
| | Total solids (% (w/w)) | 9.8 | | | |
| | Specific gravity (g/mL) | 1.02 | | | |
| | Volume (L) | 60 | | | |
| Molar ratio of calcium added per 1 mole of valine | | 0.4 | 0.2 | 0.6 | - |
| Concentr ate | Degree of concentration (% (w/w)) | 40 | 35 | 33 | 25 |
| | Concentration (g/L) | 322.1 | 285.0 | 246.9 | 210.5 |
| | Purity (% (w/w)) | 71.4 | 74.6 | 67.1 | 80 |
| | Total solids (% (w/w)) | 40 | 35 | 33 | 25 |
| | Specific gravity (g/mL) | 1.13 | 1.09 | 1.114 | 1.05 |
| | Volume (L) | 14.9 | 16.8 | 19.4 | 22.8 |

Overall, the degree of concentration was the highest when calcium was added at a molar ratio of 0.4 to the valine concentration in the fermentation broth, and it was possible to prepare high-purity granules when seeds were added in the smallest amount as well.

### Examples 1-4 and 1-5 and Comparative Example 2: Preparation of tryptophan-containing concentrate in which calcium is or is not added to fermentation broth

Concentrates were prepared by adding a calcium hydroxide slurry at molar ratios of 0.1 and 0.2 in Examples 1-4 and 1-5, respectively, in the same manner as in Examples 1-1 to 1-3 except that a tryptophan-containing fermentation broth having the composition disclosed in Table 2 was used, and the pH was 8.8 and 9.0, respectively. The sample of Comparative Example 2 was prepared by concentrating the tryptophan-containing fermentation broth without adding calcium hydroxide to the tryptophan-containing fermentation broth. The concentrations and purities of the fermentation broth used and the prepared concentrates are presented in Table 2 below. The purity slightly decreased because of the addition of the slurry. The fermentation broth to which the slurry was added was concentrated to a degree of concentration of 30% (w/w) in Example 1-4 and a degree of concentration of 35% (w/w) in Example 1-5. It was confirmed that the fermentation broth gelled and lost fluidity when concentrated to a higher degree of concentration. At this time, in the case of the fermentation broth to which a slurry was not added, only a degree of concentration of about 25.5% (w/w) was achieved.

Specifically, in the case of Example 1-4, the concentrate and the seeds were mixed in the ploughshare mixer granulator and discharged by controlling the total solids discharged to 80% (w/w). Seeds (purity: 65.0% (w/w), total solids: 99% (w/w)) were added in an amount of 53.7 kg, mixing was performed using a ploughshare mixer granulator, and the mixed granules were 76.4 kg (purity: 65.0% (w/w), total solids: 80% (w/w)). Drying was performed using a fluidized bed dryer/cooler, and 61.1 kg (purity: 65.0% (w/w), total solids: 99% (w/w)) of granules was obtained since a solid loss of 1% (w/w) occurred.

In the case of Example 1-5, the concentrate and the seeds were mixed in the ploughshare mixer granulator and discharged by controlling the total solids discharged to 80% (w/w). Seeds (purity: 65.0% (w/w), total solids: 99% (w/w)) were added in an amount of 54.9 kg, mixing was performed using a ploughshare mixer granulator, and the mixed granules were 78.1 kg (purity: 64.8% (w/w), total solids: 80% (w/w)). Drying was performed using a fluidized bed dryer/cooler, and 62.5 kg (purity: 64.8% (w/w), total solids: 99% (w/w)) of granules was obtained since a solid loss of 1% (w/w) occurred.

Moreover, the amount of calcium added was increased to a molar ratio of 0.4, and a similar experiment was conducted, but tryptophan decomposed into tryptamine, indole-acetate, and anthranilic acid because of an increase in pH.

**[Table 2]**

| | | Example 1-4 | Example 1-5 | Comparative Example 2 |
|---|---|---|---|---|
| Fermentat ion broth | Concentration (g/L) | 86 | | |
| | Purity (% (w/w)) | 66.5 | | |
| | Total solids (% (w/w)) | 12.5 | | |
| | Specific gravity (g/mL) | 1.035 | | |
| | Volume (L) | 60 | | |
| Molar ratio of calcium added per 1 mole of tryptophan | | 0.1 | 0.2 | - |
| Concentr ate | Degree of concentration (% (w/w)) | 30 | 35 | 25.2 |
| | Concentration (g/L) | 213.4 | 249.0 | 182.1 |
| | Purity (% (w/w)) | 65.0 | 63.6 | 67 |
| | Total solids (% (w/w)) | 30 | 35 | 25.5 |
| | Specific gravity (g/mL) | 1.086 | 1.093 | 1.068 |
| | Volume (L) | 24.2 | 20.7 | 28.3 |

In the case of Example 1-5, in which calcium was added at a molar ratio of 0.2 to the tryptophan concentration in the fermentation broth, the degree of concentration significantly increased as compared to that in Comparative Example 2, in which calcium was not added. Accordingly, a concentrate having a concentration increased by about 33% (w/w) was obtained.

### Examples 1-6 to 1-8 and Comparative Example 3: Preparation of isoleucine-containing concentrate in which calcium is or is not added to fermentation broth

Concentrates were prepared by adding a calcium hydroxide slurry at molar ratios of 0.4, 0.2, and 0.6, respectively, in the same manner as in Examples 1-1 to 1-3 except that an isoleucine-containing fermentation broth having the composition disclosed in Table 3 was used, and the pH was 9.5, 8.8, and 10.2, respectively (Examples 1-6 to 1-8, respectively). The sample of Comparative Example 3 was prepared by concentrating the isoleucine-containing fermentation broth without adding calcium hydroxide to the isoleucine-containing fermentation broth. The concentrations and purities of the fermentation broth used and the prepared concentrates are presented in Table 3 below. The purity slightly decreased because of the addition of the slurry. The fermentation broths to which the slurry was added were concentrated to degrees of concentration of 42% (w/w), 35% (w/w), and 32% (w/w), respectively. It was confirmed that the fermentation broth gelled and lost fluidity when concentrated to a higher degree of concentration. At this time, in the case of the fermentation broth to which a slurry was not added, only a degree of concentration of about 30% (w/w) was achieved.

For example, when calcium was added at a molar ratio of 0.4, the concentrate and the seeds were mixed in the ploughshare mixer granulator and discharged by controlling the total solids discharged to 77% (w/w). Seeds (purity: 57.0% (w/w), total solids: 99% (w/w)) were added in an amount of 19.3 kg, mixing was performed using a ploughshare mixer granulator, and the mixed granules were 31.5 kg (purity: 56.3% (w/w), total solids: 77% (w/w)). Drying was performed using a fluidized bed dryer/cooler, and 24.3 kg (purity: 56.3% (w/w), total solids: 99% (w/w)) of granules was obtained since a solid loss of 1% (w/w) occurred.

For example, when calcium was added at a molar ratio of 0.2, the concentrate and the seeds were mixed in the ploughshare mixer granulator and discharged by controlling the total solids discharged to 80% (w/w). Seeds (purity: 57.0% (w/w), total solids: 99% (w/w)) were added in an amount of 33.3 kg, mixing was performed using a ploughshare mixer granulator, and the mixed granules were 47.4 kg (purity: 56.8% (w/w), total solids: 80% (w/w)). Drying was performed using a fluidized bed dryer/cooler, and 37.9 kg (purity: 56.8% (w/w), total solids: 99% (w/w)) of granules was obtained since a solid loss of 1% (w/w) occurred.

For example, when calcium was added at a molar ratio of 0.6, the concentrate and the seeds were mixed in the ploughshare mixer granulator and discharged by controlling the total solids discharged to 80% (w/w). Seeds (purity: 57.0% (w/w), total solids: 99% (w/w)) were added in an amount of 41.8 kg, mixing was performed using a ploughshare mixer granulator, and the mixed granules were 53.8 kg (purity: 56.4% (w/w), total solids: 80% (w/w)). Drying was performed using a fluidized bed dryer/cooler, and 46.6 kg (purity: 56.4% (w/w), total solids: 99% (w/w)) of granules was obtained since a solid loss of 1% (w/w) occurred.

**[Table 3]**

| | | Example 1-6 | Example 1-7 | Example 1-8 | Comparative Example 3 |
|---|---|---|---|---|---|
| Fermentat ion broth | Concentration (g/L) | 45 | | | |
| | Purity (% (w/w)) | 57 | | | |
| | Total solids (% (w/w)) | 7.8 | | | |
| | Specific gravity (g/mL) | 1.01 | | | |
| | Volume (L) | 60 | | | |
| Molar ratio of calcium added per 1 mole of isoleucine | | 0.4 | 0.2 | 0.6 | - |
| Concentr ate | Degree of concentration (% (w/w)) | 42 | 35 | 32 | 30 |
| | Concentration (g/L) | 241.4 | 203.4 | 175.6 | 177.8 |
| | Purity (% (w/w)) | 52.9 | 54.9 | 51 | 57 |
| | Total solids (% (w/w)) | 40 | 35 | 32 | 30 |
| | Specific gravity (g/mL) | 1.087 | 1.01 | 1.076 | 1.039 |
| | Volume (L) | 11.2 | 13.3 | 15.4 | 15.2 |

Overall, the degree of concentration was the highest when calcium was added at a molar ratio of 0.4 to the isoleucine concentration in the fermentation broth, and it was possible to prepare high-purity granules when seeds were added in the smallest amount as well.

### Examples 1-9 to 1-11 and Comparative Example 4: Preparation of leucine-containing concentrate in which calcium is or is not added to fermentation broth

Concentrates were prepared by adding a calcium hydroxide slurry at molar ratios of 0.4, 0.2, and 0.6, respectively, in the same manner as in Examples 1-1 to 1-3 except that a leucine-containing fermentation broth having the composition disclosed in Table 4 was used, and the pH was 9.3, 8.9, and 10.0, respectively (Examples 1-9 to 1-11, respectively). The sample of Comparative Example 4 was prepared by concentrating the leucine-containing fermentation broth without adding calcium hydroxide to the leucine-containing fermentation broth. The concentrations and purities of the fermentation broth used and the prepared concentrates are presented in Table 4 below. The purity slightly decreased because of the addition of the slurry. The fermentation broths to which the slurry was added were concentrated to degrees of concentration of 32% (w/w), 27% (w/w), and 28% (w/w), respectively, and the concentration of the respective fermentation broths was terminated before crystal nuclei were generated. It was confirmed that the fermentation broth gelled and lost fluidity when concentrated to a higher degree of concentration. At this time, in the case of the fermentation broth to which a slurry was not added, only a degree of concentration of about 25% (w/w) was achieved.

For example, when calcium was added at a molar ratio of 0.4, the concentrate and the seeds were mixed in the ploughshare mixer granulator and discharged by controlling the total solids discharged to 80% (w/w). Seeds (purity: 60.0% (w/w), total solids: 99% (w/w)) were added in an amount of 23.0 kg, mixing was performed using a ploughshare mixer granulator, and the mixed granules were 32.1 kg (purity: 59.7% (w/w), total solids: 80% (w/w)). Drying was performed using a fluidized bed dryer/cooler, and 25.7 kg (purity: 59.7% (w/w), total solids: 99% (w/w)) of granules was obtained since a solid loss of 1% (w/w) occurred.

For example, when calcium was added at a molar ratio of 0.2, the concentrate and the seeds were mixed in the ploughshare mixer granulator and discharged by controlling the total solids discharged to 83% (w/w). Seeds (purity: 60.0% (w/w), total solids: 99% (w/w)) were added in an amount of 36.5 kg, mixing was performed using a ploughshare mixer granulator, and the mixed granules were 46.9 kg (purity: 60.0% (w/w), total solids: 83% (w/w)). Drying was performed using a fluidized bed dryer/cooler, and 38.9 kg (purity: 60.0% (w/w), total solids: 99% (w/w)) of granules was obtained since a solid loss of 1% (w/w) occurred.

For example, when calcium was added at a molar ratio of 0.6, the concentrate and the seeds were mixed in the ploughshare mixer granulator and discharged by controlling the total solids discharged to 82% (w/w). Seeds (purity: 60.0% (w/w), total solids: 99% (w/w)) were added in an amount of 34.2 kg, mixing was performed using a ploughshare mixer granulator, and the mixed granules were 45.0 kg (purity: 56.9% (w/w), total solids: 82% (w/w)). Drying was performed using a fluidized bed dryer/cooler, and 36.9 kg (purity: 56.9% (w/w), total solids: 99% (w/w)) of granules was obtained since a solid loss of 1% (w/w) occurred.

**[Table 4]**

| | Example 1-9 | Example 1-10 | Example 1-11 | Comparative Example 4 | |
|---|---|---|---|---|---|
| Fermentat ion broth | Concentration (g/L) | 28 | | | |
| | Purity (% (w/w)) | 62 | | | |
| | Total solids (% (w/w)) | 4.5 | | | |
| | Specific gravity (g/mL) | 1.010 | | | |
| | Volume (L) | 60 | | | |
| Molar ratio of calcium added per 1 mole of leucine | | 0.4 | 0.2 | 0.6 | - |
| Concentr ate | Degree of concentration (% (w/w)) | 32 | 27 | 28 | 25 |
| | Concentration (g/L) | 202 | 173 | 170 | 164 |
| | Purity (% (w/w)) | 57.6 | 59.7 | 55.7 | 62 |
| | Total solids (% (w/w)) | 32 | 27 | 28 | 25 |
| | Specific gravity (g/mL) | 1.097 | 1.072 | 1.092 | 1.059 |
| | Volume (L) | 8.3 | 9.7 | 9.9 | 10.2 |

Overall, the degree of concentration was the highest when calcium hydroxide was added at a molar ratio of 0.4 to the leucine concentration in the fermentation broth, and it was possible to prepare high-purity granules when seeds were added in the smallest amount as well.

### Examples 1-12 to 1-14 and Comparative Example 5: Preparation of threonine-containing concentrate in which calcium is or is not added to fermentation broth

Concentrates were prepared by adding a calcium hydroxide slurry at molar ratios of 0.4, 0.2, and 0.6, respectively, in the same manner as in Examples 1-1 to 1-3 except that a threonine-containing fermentation broth having the composition disclosed in Table 5 was used, and the pH was 9.5, 8.8, and 10.2, respectively (Examples 1-12 to 1-14, respectively). The sample of Comparative Example 5 was prepared by concentrating the threonine-containing fermentation broth without adding calcium hydroxide to the threonine-containing fermentation broth. The concentrations and purities of the fermentation broth used and the prepared concentrates are presented in Table 5 below. The purity slightly decreased because of the addition of the slurry. The fermentation broths to which the slurry was added were concentrated to degrees of concentration of 35% (w/w), 25% (w/w), and 26% (w/w), respectively, and the concentration of the respective fermentation broths was terminated before crystal nuclei were generated. In the case of threonine, crystal grains were generated in a needle-like shape and had an excellent form, and thus the concentrates were confirmed to be at the same level as one another at all of the calcium molar ratios when concentration proceeded to the maximum degrees of concentration. At this time, in the case of the fermentation broth to which the slurry was not added, it was confirmed that crystal nuclei were generated when concentration proceeded to a degree of concentration of about 18% (w/w).

**[Table 5]**

| | | Example 1-12 | Example 1-13 | Example 1-14 | Comparative Example 5 |
|---|---|---|---|---|---|
| Fermentat ion broth | Concentration (g/L) | 120 | | | |
| | Purity (% (w/w)) | 77 | | | |
| | Total solids (% (w/w)) | 15 | | | |
| | Specific gravity (g/mL) | 1.035 | | | |
| | Volume (L) | 60 | | | |
| Molar ratio of calcium added per 1 mole of threonine | | 0.4 | 0.2 | 0.6 | - |
| Concentr ate | Degree of concentration (% (w/w)) | 35 | 25 | 27.5 | 18 |
| | Concentration (g/L) | 275 | 200 | 200 | 140 |
| | Purity (% (w/w)) | 69 | 72.5 | 65.9 | 74.1 |
| | Total solids (% (w/w)) | 35 | 25 | 27.5 | 18 |
| | Specific gravity (g/mL) | 1.131 | 1.092 | 1.101 | 1.064 |
| | Volume (L) | 26.3 | 35.5 | 35.5 | 50.7 |

Overall, the degree of concentration was the highest when calcium hydroxide was added at a molar ratio of 0.4 to the threonine concentration in the fermentation broth.

### Example 2: Production of amino acid granules at different percentages of moisture discharged from granules

### Examples 2-1 to 2-3 and Comparative Examples 6 and 7: Granulation of valine-containing concentrate to which calcium is added by mixing granulation method

The valine-containing fermentation broth (300 L) used in Example 1-1 was added to a 500 L stainless steel tank, and the fermentation broth was stirred using a stirrer. To the solution, 6.4 kg of calcium hydroxide and 8.0 kg of water were added so that the molar ratio of calcium/valine was 0.4, and the mixture was stirred for one additional hour. At this time, the pH was 9.5, the volume of the mixed solution was 310.9 L, the valine concentration therein was 77.2 g/L, the purity thereof was 71.4% (w/w), and the total solids therein were 10.5% (w/w). The mixed solution was concentrated while being added to a forced circulation concentrator (Manmin Machinery). The concentration was performed until the total solids reached 40% (w/w) at a pressure of 0.1 atm and a pressure of the steam injected into the heat exchanger of 3 atm. The concentration of the concentrate, of which the concentration was completed at the above degree of concentration, was 322.1 g/L, the purity thereof was 71.4% (w/w), the total solids therein were 40.0% (w/w), and the volume thereof was 74.5 L. Subsequently, granules were prepared using a ploughshare mixer granulator. As in Example 1-1, the seeds were added at a rate of 20 kg per hour, and the concentrate was added based on the total solids in the discharged granules. The prepared granules were dried using a fluidized bed dryer, and the recovery rate was about 99% (w/w) since fine powders and the like were generated. The experimental results are presented in Table 6 below.

Samples of Examples 2-1 to 2-3 and Comparative Examples 6 and 7 were prepared by preparing granules in the same manner as above except that the percentage of moisture discharged from the granules was adjusted to 15.0% (w/w) to 27.5% (w/w), respectively. In the case of the sample of Comparative Example 1, a large amount of seeds was required since the percentage of moisture discharged was only 12% (w/w). In the case of the samples of Examples 1-1 and 2-1 to 2-3, it was possible to increase the percentage of moisture discharged to 17.5% (w/w) to 25.0% (w/w). However, it was found that the samples of Comparative Examples 6 and 7 having percentages of moisture discharged of 15.0% (w/w) and 27.5% (w/w), respectively, were not suitable for granule formation. For example, the concentrate was not uniformly granulated to have the same size as or a similar size to the seed when the percentage of moisture discharged from the granules was 17.5% (w/w), and aggregation of the granules occurred when the percentage of moisture discharged from the granules was 27.5% (w/w). The properties of the samples of Examples and Comparative Examples are summarized in Table 6 below.

**[Table 6]**

| | Comparati ve Example 1 | Comparat ive Example 6 | Comparati ve Example 7 | Example 1-1 | Example 2-1 | Example 2-2 | Example 2-3 |
|---|---|---|---|---|---|---|---|
| Rate of concentrate addition (kg/hr) | 3.5 | 7.1 | 15.1 | 9.5 | 7.8 | 11.5 | 13.7 |
| Percentage of moisture discharged (% (w/w)) | 12 | 15.0 | 27.5 | 20.0 | 17.5 | 22.5 | 25.0 |
| Formation of granules | ○ | × | × | ○ | ○ | ○ | ○ |
| Amount of seeds added (kg) | 137.5 | - | - | 35.4 | 43.3 | 29.3 | 24.5 |
| Weight of granules (kg) | 161.5 | - | - | 52.2 | 60.1 | 46.1 | 41.3 |
| Purity of granules (% (w/w)) | 78.6 | - | - | 77.4 | 77.5 | 77.2 | 77.0 |
| Weight after drying (g) | 142.1 | - | - | 41.7 | 49.6 | 35.7 | 31.0 |
| Purity of dried product (% (w/w)) | 78.6 | - | - | 77.4 | 77.5 | 77.2 | 77.0 |

### Examples 2-4 and 2-5 and Comparative Examples 8 and 9: Granulation of tryptophan-containing concentrate to which calcium is added by way of mixing granulation method

Granulation was performed by adjusting the percentage of moisture discharged from the concentrate prepared according to Example 1-4 to 20.0% (w/w) to 25.0% (w/w). In the case of the sample of Comparative Example 2, a large amount of seeds was required since the percentage of moisture discharged was only 12% (w/w). In the case of the samples of Examples 1-5, 2-4, and 2-5, it was possible to increase the percentage of moisture discharged to 20.0% (w/w) to 25.0% (w/w). However, it was found that the samples of Comparative Examples 8 and 9 having percentages of moisture discharged of 17.5% (w/w) and 27.5% (w/w), respectively, were not able to form granules. The properties of the samples of Examples and Comparative Examples are summarized in Table 7 below.

**[Table 7]**

| | Comparati ve Example 2 | Comparati ve Example 8 | Comparati ve Example 9 | Example 1-5 | Example 2-4 | Example 2-5 |
|---|---|---|---|---|---|---|
| Percentage of moisture discharged (% (w/w)) | 12 | 17.5 | 27.5 | 20.0 | 22.5 | 25.0 |
| Formation of granules | ○ | × | × | ○ | ○ | ○ |
| Amount of seeds added (kg) | 123.7 | - | - | 50.7 | 42.3 | 35.7 |
| Weight of granules (kg) | 145.5 | - | - | 72.1 | 63.7 | 57.1 |
| Purity of granules (% (w/w)) | 65.1 | - | - | 64.9 | 64.9 | 64.8 |
| Weight after drying (g) | 128.0 | - | - | 57.7 | 49.4 | 42.8 |
| Purity of dried product (% (w/w)) | 65.1 | - | - | 64.9 | 64.9 | 64.8 |

### Examples 2-6 and 2-7 and Comparative Examples 10 and 11: Granulation of isoleucine-containing concentrate to which calcium is added by way of mixing granulation method

Granulation was performed by adjusting the percentage of moisture discharged from the concentrate prepared by reacting a fermentation broth with calcium hydroxide at a molar ratio of 0.4 according to Example 1-6 to 20.0% (w/w) to 25.0% (w/w). In the case of the sample of Comparative Example 3, a large amount of seeds was required since the percentage of moisture discharged was only 15% (w/w). In the case of the samples of Examples 1-6, 2-6, and 2-7, it was possible to increase the percentage of moisture discharged to 20.0% (w/w) to 25.0% (w/w). However, it was found that the samples of Comparative Examples 10 and 11 having percentages of moisture discharged of 17.5% (w/w) and 27.5% (w/w), respectively, were not able to form granules. The properties of the samples of Examples and Comparative Examples are summarized in Table 8 below.

**[Table 8]**

| | Comparati ve Example 3 | Comparati ve Example 10 | Comparativ e Example 11 | Example 1-6 | Example 2-6 | Example 2-7 |
|---|---|---|---|---|---|---|
| Percentage of moisture discharged (% (w/w)) | 15 | 17.5 | 27.5 | 23.0 | 20.0 | 25.0 |
| Formation of granules | ○ | × | × | ○ | ○ | ○ |
| Amount of seeds added (kg) | 62 | - | - | 19.3 | 24.3 | 16.7 |
| Weight of granules (kg) | 77.8 | - | - | 31.5 | 36.5 | 28.9 |
| Purity of granules (% (w/w)) | 57.0 | - | - | 56.3 | 56.4 | 56.1 |
| Weight after drying (g) | 66.1 | - | - | 24.3 | 29.2 | 21.7 |
| Purity of dried product (% (w/w)) | 57.0 | - | - | 56.3 | 56.4 | 56.1 |

### Examples 2-8 and 2-9 and Comparative Examples 10 and 11: Granulation of leucine-containing concentrate to which calcium is added by way of mixing granulation method

Granulation was performed by adjusting the percentage of moisture discharged from the concentrate prepared by reaction a fermentation broth with calcium hydroxide at a molar ratio of 0.4 according to Example 1-9 to 18.0% (w/w) to 23.0% (w/w). In the case of the sample of Comparative Example 4, a large amount of seeds was required since the percentage of moisture discharged was only 15% (w/w). In the case of the samples of Examples 1-9, 2-8, and 2-9, it was possible to increase the percentage of moisture discharged to 18.0% (w/w) to 23.0% (w/w). However, it was found that the samples of Comparative Examples 10 and 11 having percentages of moisture discharged of 15% (w/w) and 27% (w/w), respectively, were not able to form granules. The properties of the samples of Examples and Comparative Examples are summarized in Table 9 below.

**[Table 9]**

| | Comparati ve Example 4 | Comparati ve Example 12 | Comparati ve Example 13 | Example 1-9 | Example 2-8 | Example 2-9 |
|---|---|---|---|---|---|---|
| Percentage of moisture discharged (% (w/w)) | 15 | 15 | 27 | 20 | 18 | 23 |
| Formation of granules | ○ | × | × | ○ | ○ | ○ |
| Amount of seeds added (kg) | 77.4 | - | - | 23.0 | 26.8 | 18.6 |
| Weight of granules (kg) | 93.4 | - | - | 32.1 | 35.9 | 27.7 |
| Purity of granules (% (w/w)) | 60.1 | - | - | 59.7 | 59.8 | 59.7 |
| Weight after drying (g) | 79.4 | - | - | 25.7 | 29.4 | 21.4 |
| Purity of dried product (% (w/w)) | 60.1 | - | - | 59.7 | 59.8 | 59.7 |

### Example 3: Preparation of calcium-added amino acid granules by way of fluidized bed granulation method

### Example 3-1 and Comparative Example 14: Preparation of valine-containing granules to which calcium is added by way of fluidized bed granulation

A valine fermentation broth (2 L) having the composition disclosed in Table 10 was added to a 3 L glass beaker and stirred at 25°C using a stirrer (model name: HT-50AX, DAIHAN SCIENTIFIC). To the solution, 43 g of calcium hydroxide and 53 g of water were added so that the molar ratio of calcium/valine was 0.4, and the mixture was stirred for one additional hour. At this time, the pH was 9.5, the volume of the mixed solution was 2.1 L, the valine concentration therein was 77.2 g/L, the purity thereof was 71.4% (w/w), and the total solids therein were 10.5% (w/w). The mixed solution was concentrated while being added to a 2 L concentration tube (model name N-1200B, EYELA). The concentration was performed until the total degree of concentration reached 31% (w/w) at a pressure of 0.1 atm and a water bath temperature of 70°C. The concentration was terminated at a degree of concentration of 31% (w/w) before crystals were generated for injection into the fluidized bed granulator nozzle. The concentration of the concentrate after completion of concentration was 242.7 g/L, the purity thereof was 71.4% (w/w), the total solids therein were 31% (w/w), and the volume thereof was 0.7 L. Subsequently, 361 g of seeds were added to a laboratory fluidized bed granulator/dryer (GR Engineering), and a total of 722.7 g of the concentrate was added thereto at a rate of 180.7 g per hour. The seeds used were the same as those in Examples above. The recovered granules were 558.2 g, the purity thereof was 75.8% (w/w), and the total solids therein were 99% (w/w) (Example 3-1).

Separately, 2 L of the valine fermentation broth was concentrated while being added to a 2 L concentration tube. The concentration was performed until the total degree of concentration reached 15% (w/w) at a pressure of 0.1 atm and a water bath temperature of 70°C. The concentration of the concentrate, of which the concentration was completed at the above degree of concentration, was 123.7 g/L, the purity thereof was 80.0% (w/w), the total solids therein were 15% (w/w), and the volume thereof was 1.3 L. Subsequently, 667 g of seeds were added to a laboratory fluidized bed granulator/dryer, and a total of 1,333 g of the concentrate was added thereto at a rate of 333 g per hour. The seeds used were the same as those in Examples above. The recovered granules were 825 g, the purity thereof was 78.8% (w/w), and the total solids therein were 99% (w/w) (Comparative Example 14).

The concentrations and purities of the fermentation broth used and prepared concentrates in Example 3-1 and Comparative Example 14 are presented in Table 10 below.

**[Table 10]**

| | | Example 3-1 | Comparative Example 14 |
|---|---|---|---|
| Fermentation broth | Concentration (g/L) | 80 | |
| | Purity (% (w/w)) | 79 | |
| | Total solids (% (w/w)) | 9.9 | |
| | Specific gravity (g/mL) | 1.02 | |
| | Volume (L) | 2 | |
| Molar ratio of calcium added per 1 mole of valine | | 0.4 | - |
| Concentrate | Degree of concentration (% (w/w)) | 31 | 15 |
| | Concentration (g/L) | 241.8 | 122.1 |
| | Purity (% (w/w)) | 71.3 | 79.0 |
| | Total solids (% (w/w)) | 31 | 15 |
| | Specific gravity (g/mL) | 1.094 | 1.03 |
| | Volume (L) | 0.7 | 1.3 |

### Example 3-2 and Comparative Example 15: Preparation of tryptophan-containing granules to which calcium is added by way of fluidized bed granulation

Samples of Example 3-2 and Comparative Example 15 were prepared by performing concentration (concentration was terminated at degrees of concentration of 28% (w/w) and 15% (w/w), respectively) and granulation in the same manner as in Example 3-1 and Comparative Example 14 except that a tryptophan-containing fermentation broth having the composition disclosed in Table 11 was used instead of the valine-containing fermentation broth. The concentrations and purities of the fermentation broth used and prepared concentrates are presented in Table 11 below.

**[Table 11]**

| | | Example 3-2 | Comparative Example 15 |
|---|---|---|---|
| Fermentation broth | Concentration (g/L) | 86 | |
| | Purity (% (w/w)) | 66.5 | |
| | Total solids (% (w/w)) | 12.5 | |
| | Specific gravity (g/mL) | 1.035 | |
| | Volume (L) | 2 | |
| Molar ratio of calcium added per 1 mole of tryptophan | | 0.2 | - |
| Concentrate | Degree of concentration (% (w/w)) | 28 | 15 |
| | Concentration (g/L) | 194.6 | 104 |
| | Purity (% (w/w)) | 63.6 | 66.5 |
| | Total solids (% (w/w)) | 28 | 15 |
| | Specific gravity (g/mL) | 1.083 | 1.043 |
| | Volume (L) | 0.9 | 1.7 |

### Example 3-3 and Comparative Example 16: Preparation of isoleucine-containing granules to which calcium is added by way of fluidized bed granulation

Samples of Example 3-3 and Comparative Example 16 were prepared by performing concentration (concentration was terminated at degrees of concentration of 18% (w/w) and 10% (w/w), respectively) and granulation in the same manner as in Example 3-1 and Comparative Example 14 except that an isoleucine-containing fermentation broth having the composition disclosed in Table 12 was used instead of the valine-containing fermentation broth. The concentrations and purities of the fermentation broth used and prepared concentrates are presented in Table 12 below.

**[Table 12]**

| | | Example 3-3 | Comparative Example 16 |
|---|---|---|---|
| Fermentation broth | Concentration (g/L) | 45 | |
| | Purity (% (w/w)) | 57 | |
| | Total solids (% (w/w)) | 7.8 | |
| | Specific gravity (g/mL) | 1.01 | |
| | Volume (L) | 2 | |
| Molar ratio of calcium added per 1 mole of isoleucine | | 0.4 | - |
| Concentrate | Degree of concentration (% (w/w)) | 18 | 10 |
| | Concentration (g/L) | 98.6 | 57.7 |
| | Purity (% (w/w)) | 52.9 | 57 |
| | Total solids (% (w/w)) | 18 | 10 |
| | Specific gravity (g/mL) | 1.036 | 1.012 |
| | Volume (L) | 0.9 | 1.6 |

### Example 3-4 and Comparative Example 17: Preparation of leucine-containing granules to which calcium is added by way of fluidized bed granulation

Samples of Example 3-4 and Comparative Example 17 were prepared by performing concentration (concentration was terminated at degrees of concentration of 16% (w/w) and 10% (w/w), respectively) and granulation in the same manner as in Example 3-1 and Comparative Example 14 except that a leucine-containing fermentation broth having the composition disclosed in Table 13 was used instead of the valine-containing fermentation broth. The concentrations and purities of the fermentation broth used and prepared concentrates are presented in Table 13 below.

**[Table 13]**

| | | Example 3-4 | Comparative Example 17 |
|---|---|---|---|
| Fermentation broth | Concentration (g/L) | 28 | |
| | Purity (% (w/w)) | 62 | |
| | Total solids (% (w/w)) | 4.5 | |
| | Specific gravity (g/mL) | 1.010 | |
| | Volume (L) | 2 | |
| Molar ratio of calcium added per 1 mole of leucine | | 0.4 | - |
| Concentrate | Degree of concentration (% (w/w)) | 16 | 10 |
| | Concentration (g/L) | 96.5 | 63.4 |
| | Purity (% (w/w)) | 57.6 | 62 |
| | Total solids (% (w/w)) | 16 | 8 |
| | Specific gravity (g/mL) | 1.046 | 1.022 |
| | Volume (L) | 0.6 | 0.9 |

### Example 3-5 and Comparative Example 18: Preparation of threonine-containing granules to which calcium is added by fluidized bed granulation

Samples of Example 3-5 and Comparative Example 18 were prepared by performing concentration (concentration was terminated at degrees of concentration of 35% (w/w) and 18% (w/w), respectively) and granulation in the same manner as in Example 3-1 and Comparative Example 14 except that a threonine-containing fermentation broth having the composition disclosed in Table 14 was used instead of the valine-containing fermentation broth. The concentrations and purities of the fermentation broth used and prepared concentrates are presented in Table 14 below.

**[Table 14]**

| | | Example 3-5 | Comparative Example 18 |
|---|---|---|---|
| Fermentation broth | Concentration (g/L) | 120 | |
| | Purity (% (w/w)) | 77 | |
| | Total solids (% (w/w)) | 15 | |
| | Specific gravity (g/mL) | 1.035 | |
| | Volume (L) | 2 | |
| Molar ratio of calcium added per 1 mole of threonine | | 0.4 | - |
| Concentrate | Degree of concentration (% (w/w)) | 35 | 18 |
| | Concentration (g/L) | 375 | 145 |
| | Purity (% (w/w)) | 69 | 74.1 |
| | Total solids (% (w/w)) | 35 | 18.3 |
| | Specific gravity (g/mL) | 1.130 | 1.066 |
| | Volume (L) | 0.9 | 1.7 |

### Example 4: Effect due to treatment of concentrate using homogenizer prior to granulation

In Example 3-2, the calcium and tryptophan-containing concentrate was treated using a homogenizer prior to granulation using a fluidized bed granulator, the particle sizes before/after the treatment were measured by focused beam reflectance measurement (FBRM), and the results are illustrated in FIG. 1 and Table 15. As illustrated in FIG. 1 and Table 15, changes due to other factors were hardly observed, but the particle distribution at 100 µm or more was diminished, and the average particle size also significantly decreased from 43 µm to 35 µm after the treatment using a homogenizer as compared to the results before the treatment using a homogenizer. This suggests that the use of a homogenizer prior to granulation can solve problems such as clogging of nozzles in the fluidized bed granulator.

**[Table 15]**

| | Before treatment using | After treatment using |
|---|---|---|
| | homogenizer | homogenizer |
| Tryptophan concentration (g/kg) | 146.8 | 147.0 |
| TS (% (w/w)) | 24.0 | 24.0 |
| Purity (% (w/w)) | 61.2 | 61.3 |
| Average particle size due to FBRM (µm) | 43.0 | 35.0 |

### Comparative Example 19: Effect on concentration of fermentation broth due to addition of zinc hydroxide

The valine fermentation broth (60 L) used in Example 1-1 was added to a 110 L plastic container and stirred at 25°C and 100 rpm using a stirrer. To the solution, 1.7 kg of zinc hydroxide (content: 98% (w/w), DAEJUNG CHEMICALS AND METALS) and 2.5 kg of water were added so that the molar ratio of zinc/valine was 0.4, and the mixture was stirred for one additional hour. At this time, the pH was 9.3, the volume of the mixed solution was 63.0 L, the valine concentration therein was 76.1 g/L, the purity thereof was 67.6% (w/w), and the total solids therein were 10.9% (w/w). The mixed solution was concentrated while being added to a 20 L concentration tube. The concentration was performed until the total degree of concentration reached 25% (w/w) at a pressure of 0.1 atm and a water bath temperature of 70°C. The concentration of the concentrate, of which the concentration was completed at the above degree of concentration, was 183.9 g/L, the purity thereof was 67.6% (w/w), the total solids therein were 25% (w/w), and the volume thereof was 26.1 L. Subsequently, granules were prepared using a ploughshare mixer granulator. As in Example 1-1, a total of 82.3 kg of seeds was added to the screw feeder in the ploughshare mixer granulator at a rate of 20 kg per hour, and a total of 28.4 kg of the concentrate was added thereto at a rate of 6.9 kg per hour using a peristaltic pump. Granules containing solids at 80% (w/w) were recovered in an amount of 110.7 kg, and dried using a fluidized bed dryer, and recovered in an amount of 88.6 kg with a recovery rate of 99% (w/w) since fine powders and the like were generated. The purity of the recovered granules was 77.6% (w/w) and the total solids therein were 99% (w/w).

However, unlike Example 1-1 in which calcium hydroxide was used, when zinc hydroxide (Comparative Example 19) was added, it was confirmed that the effect of improving the degree of concentration was not exerted, and the experiment was terminated.

### Experimental Example 1: Binder effect of calcium in calcium-containing amino acid granules

Calcium-containing amino acid granules were prepared by granulating a fermentation broth in which calcium hydroxide was added to a tryptophan-containing fermentation broth at a molar ratio of 0.2. For comparison to this, a sample was prepared by granulating a fermentation broth to which calcium hydroxide or a separate binder was not added but sulfuric acid was added for adjustment of the pH to 5.0. The purity of total solids and the purity of granules to be commercialized were measured, and a value of the purity of granules to the purity of total solids expressed as the difference therebetween was calculated. As a result, in the case of calcium-containing tryptophan granules, the value of the purity of granules to the purity of total solids was a small value of -0.6 to indicate that the purity of granules is hardly different from the purity of total solids even though the calcium-containing tryptophan granules were prepared from a basic fermentation broth having a pH of 9.0, which was expected to provide a decreased amount of crystals because of the increased solubility due to the use of calcium hydroxide. However, the granules prepared from the fermentation broth that did not contain calcium and had a pH of 5.0 had a significant decrease in purity of 4% (w/w) or more. This suggests that calcium can act as a binder to enhance cohesion between tryptophan crystals and a liquid phase.

Thus, in order to examine whether the difference in the decrease in purity described above is due to the difference in pH, granules were prepared from a fermentation broth having a pH of 9.0 adjusted by adding sodium hydroxide in the same manner as the calcium-containing fermentation broth prepared by adding calcium hydroxide instead of adding sulfuric acid to adjust the pH to 5.0, and the value of the purity of granules to the purity of total solids in the granules was calculated and compared to the value in the calcium-containing amino acid granules. As a result, the amino acid granules prepared by adding calcium hydroxide at a molar ratio of 0.2 had a small decrease in purity of -0.8% (w/w), which was less than 1% (w/w). However, a large decrease in purity of -6.6% (w/w) was confirmed in the case of amino acid granules prepared from the fermentation broth to which sodium hydroxide was added to have the same pH as the calcium-containing fermentation broth.

The value of the purity of granules to the purity of total solids in amino acid granules prepared by adding PVP, known as a binder, at 1 wt% (w/w) instead of adding calcium was calculated and compared to the value in the calcium-containing amino acid granules. As a result, the amino acid granules prepared by adding calcium hydroxide at a molar ratio of 0.2 had a small decrease in purity of -0.9% (w/w), which was still less than 1% (w/w). However, a large decrease in purity of -3.5% (w/w) was confirmed in the case of amino acid granules prepared by adding PVP as a binder at 1 wt% (w/w).

Overall, the above results are summarized in Table 16 below, and this suggests that the amino acid granules prepared by adding calcium ion can secure excellent content stability without adjusting the pH or containing a binder.

**[Table 16]**

| Granule test conditions | Calcium | 1 wt% (w/w) PVP | Calcium added at | NaOH | added |
|---|---|---|---|---|---|
| Granulatio n conditions | Total solids (% (w/w)) | 23.5 | 23.4 | 26.3 | 25.2 |
| | Molar ratio of Ca(OH)₂ | 0.20 | - | 0.20 | - |
| | Purity of total solids (% (w/w)) | 62.4 | 64.4 | 61.6 | 59.9 |
| Granule content (% (w/w)) | | 61.5 | 60.9 | 60.8 | 53.3 |
| Difference in content to purity of total solids | | -0.9 | -3.5 | -0.8 | -6.6 |

Specifically, as presented in Table 16, under the same fermentation broth conditions, the difference in granule content to the purity of total solids had a small deviation of less than 1% (w/w) when calcium hydroxide was added at a molar ratio of 0.2. On the other hand, when PVP, which is widely used as a binder, was added at 1 wt% (w/w), the difference in granule content was as high as 3.5% (w/w), three times or more compared to 1% (w/w). When sodium hydroxide instead of calcium hydroxide was added at the same molar ratio, the difference in granule content significantly increased to 6.6% (w/w), and this suggests that metals other than calcium do not exert the effect as a binder.

### Experimental Example 2: Improvement in hygroscopicity of granules due to addition of calcium

The sample prepared according to Example 1-1 and the sample prepared according to Comparative Example 1 were left at a humidity of 60% (w/w) and a temperature of 40°C, the weights of the samples were measure immediately after preparation, after 24 hours, and after 48 hours, respectively, to examine the hygroscopicity thereof, and the results are summarized in Table 17 below. As presented in Table 17, in the case of the sample of Example 1-1, there was a weight increase of about 3% (w/w) after 24 hours, and there was no additional weight increase thereafter. However, in the case of the sample of Comparative Example 1, there was a weight increase of about 10% (w/w) up to 24 hours, and the weight increase was significantly diminished, but there was an additional weight increase thereafter as well. This indicates that the amino acid granules prepared by adding calcium have a decreased coefficient of moisture absorption over time under high temperature and/or rather high humidity conditions, and that they thus exhibit improved storage stability.

**[Table 17]**

| | Example 1-1 | Comparative Example 1 |
|---|---|---|
| Humidity (% (w/w)) | 60 | 60 |
| Temperature (°C) | 40 | 40 |
| Weight of sample added (g) | 15 | 15 |
| Weight of sample after 24 hours (g) | 15.5 | 16.5 |
| Weight of sample after 48 hours (g) | 15.5 | 16.6 |

Based on the above description, it will be understood by those skilled in the art that the present application may be implemented in a different specific form without changing the technical spirit or essential characteristics thereof. Therefore, it should be understood that the above embodiment is not limitative, but illustrative in all aspects. The scope of the present application is defined by the appended claims rather than by the description preceding them, and therefore all changes and modifications that fall within metes and bounds of the claims or equivalents of such metes and bounds are thus intended to be embraced by the claims.

## Claims

1. A method for preparing amino acid granules, which comprises:
a first step of adding a calcium source to a fermentation broth containing an amino acid at a molar ratio of 0.02 to 2.0 to the amino acid; and
a second step of granulating a product obtained in the previous step.

2. The preparation method according to claim 1, which further comprises a step of performing concentration before or after the first step.

3. The preparation method according to claim 2, wherein a product obtained in the concentration step is prepared at a degree of concentration of more than 0% (w/w) and 70% (w/w) or less.

4. The preparation method according to claim 1, wherein the amino acid is an amino acid having a solubility of more than 0 g/100 g and 20 g/100 g or less in water at 25°C.

5. The preparation method according to claim 1, wherein the amino acid is valine, tryptophan, threonine, isoleucine, or leucine.

6. The preparation method according to claim 1, which further comprises a step of adjusting a percentage of moisture discharged from a product obtained in the previous step to 10% (w/w) to 50% (w/w) before the granulation step.

7. The preparation method according to claim 1, which further comprises a step of pulverizing a product obtained in the previous step before the granulation step.

8. Amino acid granules comprising an amino acid and a calcium ion at a molar ratio of 0.02 to 2.0 to the amino acid.

9. The amino acid granules according to claim 8, wherein the amino acid granules exhibit a coefficient of moisture absorption of 7% (w/w) or less when standing at a humidity of 60% (w/w) and a temperature of 40°C for 1 to 48 hours from a time point of granulation.

10. The amino acid granules according to claim 8, wherein the amino acid granules are prepared by the method according to any one of claims 1 to 7.

11. A feed composition comprising the amino acid granules according to claim 8.
